# EUROPÄISCHE PATENTSCHRIFT

(11) **EP 2 166 335 B1**
(45) Veröffentlichungstag und Bekanntmachung des Hinweises auf die Patenterteilung: **10.04.2013**
(21) Anmeldenummer: 08164548.3
(22) Anmeldetag: 18.09.2008
(51) Int. Cl.: G01N 1/28

(54) **Verfahren und Vorrichtung für das zeitgleiche, automatisierte Aufschließen von mehreren biologischen Proben**
Method and device for simultaneous automatic decomposition of several biological probes
Procédé et dispositif pour l'ouverture simultanée automatique de plusieurs échantillons biologiques

(43) Veröffentlichungstag der Anmeldung: 24.03.2010
(60) Teilanmeldung: 12173105.3
(73) Patentinhaber: Qiagen GmbH, 40724 Hilden (DE)
(72) Erfinder: Bär, Gerhard, 66557, Illingen (DE); Mertens, Dennis, 40721, Hilden (DE); Schäfer, Andreas, 51375, Leverkusen (DE); Wilmer, Friedericke, 53639, Königswinter (DE)
(74) Vertreter: Gille Hrabal

(56) Entgegenhaltungen:
- WO-A2-2004/027024
- US-A1- 2004 115 720
- US-A1- 2005 178 726
- US-B1- 6 235 501
- US-B1- 6 258 930

## Beschreibung

Die Erfindung betrifft ein Verfahren und eine Vorrichtung für das Aufschließen einer pflanzlichen oder tierischen Probe für eine Prozessierung, also beispielsweise für die Isolierung von Nukleinsäuren oder Proteinen aus der Probe. Solche Vorbereitungen und Untersuchungen werden in einem Labor von einer Laborantin oder von einem Laboranten anhand von standardisierten Arbeitsanleitungen durchgeführt. Zu einer solchen Arbeitsanleitung gehört ein sogenanntes Protokoll. Ein Beispiel für ein solches Protokoll zur Isolierung von Plasmid-DNA aus E. coli. geht aus der Druckschrift DE 101 53 957 A1 hervor.

Um eine Probe in gewünschter Weise zu prozessieren, also beispielsweise die Nukleinsäuren oder Proteine zu isolieren, können in Abhängigkeit von der Probe und vom gewünschten Ergebnis sogenannte "Kits" kommerziell erhalten werden, so zum Beispiel das "UltraClean Tissue DNA Isolation Kit" der Fa. Qiagen (www.Qiagen.com). Bevor eine Probe mit Hilfe eines solchen Kits gemäß einem vorgegebenen Protokoll prozessiert wird, muss diese geeignet vorbereitet werden.

Nachfolgend werden solche aus dem Stand der Technik bekannte typische Vorbereitungen beschrieben.

Einem Versuchstier, so zum Beispiel einer Ratte, wird beispielsweise ein Organ entnommen. Es hängt von der Zielsetzung ab, welches Organ eines Tieres ausgewählt wird. Das entnommene Organ bzw. Gewebe des Tieres wird in einer Waschpufferlösung gewaschen, so zum Beispiel in PBS (Phosphate Buffered Saline mit folgendem Inhalt: Na₂HPO₄ (getrocknet), NaH₂PO₄ (getrocknet), NaCl und destilliertes Wasser). Durch die Waschung wird das Gewebe des entnommenen Teils blutfrei bereitgestellt und von unerwünschten Bestandteilen befreit.

Im Anschluss daran wird das entnommene Gewebe im flüssigen Stickstoff gekühlt und zwar u. a., um Zellaktivitäten zu stoppen. Andernfalls würde nicht die gewünschte Information in der gewünschten Qualität im Anschluss an die Prozessierung erhalten. Typischerweise wird dabei Gewebe mit einer Körpertemperatur von beispielsweise 37°C in flüssigen Stickstoff eingetaucht. Es entwickeln sich Blasen. Das Gewebe wird erst wieder dem flüssigen Stickstoff entnommen, wenn die Blasenbildung stoppt. Im Anschluss daran wird das Gewebe bei -80°C beispielsweise mit Hilfe von Trockeneis gelagert.

Soll der Kühlschritt in Flüssigstickstoff vermieden werden, so wird alternativ im Anschluss an die Waschung das entnommene Gewebe chemisch konserviert und zwar über Stabilisierungsreagenzien wie z. B. RNAlater®. RNAlater® ist eine viskose Flüssigkeit, die von der Firma Ambion (www.ambion.com) zur Konservierung von Frischgewebe entwickelt wurde. Die Konservierungswirkung beruht vor allem darauf, dass alle Enzyme durch Wasserentzug im Gewebe inaktiviert und Zellaktivitäten gestoppt werden. Die viskose Flüssigkeit muss schnell in alle Zellen des Gewebes hinein diffundieren. Die Größe der Gewebestücke ist daher auf eine Kantenlänge von maximal einem halben Zentimeter zu beschränken. Im Anschluss an die chemische Behandlung wird auch das so behandelte Gewebe bei -80° gekühlt, um es so bis zur Prozessierung zu lagern.

Für eine Prozessierung werden typischerweise 10 bis 100 mg an Gewebe benötigt, um die gewünschte Untersuchung, Isolierung oder dergleichen durchzuführen. Es wird nun vor Beginn der Prozessierung die benötigte Menge an tierischem Gewebe beispielsweise mit einem Skalpell abgetrennt.

Die bisher genannten Schritte der Probenvorbereitung können einzeln oder in Kombination Merkmale der unten beschriebenen Erfindung sein.

Die abgetrennte Probe, also das abgetrennte Gewebe wird nun aufgeschlossen, das heißt, die Zellwände müssen geöffnet werden. Dies kann mechanisch, chemisch oder enzymatisch erfolgen. Ein mechanischer Aufschluss erfolgt beispielsweise mit Hilfe eines "TissueRuptor" der Firma Qiagen, bekannt aus dem TissueRuptor Handbook, Juli 2006 der Firma Qiagen aus Hilden, Deutschland. Dabei zerschlägt ein drehendes Messer mit 35.000 Umdrehungen pro Minute Zellwände des Gewebes. Mechanische Aufschlüsse werden regelmäßig in einem Puffer durchgeführt, um Schädigungen der Inhaltsstoffe wie zum Beispiel Nukleinsäuren zu vermeiden.

Ein in einem Behälter unter Anwesenheit eines Puffers, also eines chemischen Stoffes durchgeführter mechanischer Aufschluss ist aus der Druckschrift EP 1577011 A2 bekannt.

Es ist auch bekannt (siehe zum Beispiel
http://www.laborpraxis.de/fachartikel/lp_fachartikel_nh_2384859.html, Stand 12. März 2007), Proben in einer Kryomühle vorzubereiten. Bei dieser aktiv gekühlten Mühle wird die Probe bei der Temperatur von flüssigem Stickstoff gemahlen. Die Probe bleibt während des gesamten Mahlvorgangs tiefgekühlt, ohne mit dem Stickstoff in Kontakt zu kommen. Dieses technisch recht aufwendige Verfahren kann bei solchen Proben durchgeführt werden, bei denen das vorgenannte Verfahren versagt, so zum Beispiel bei sehr harten Materialien wie Knochen oder bei klollagenhaltigen Materialien wie Haut. Soll ein Knochen vorbereitet werden, so ist auch bekannt, diesen in ein mit flüssigem Stickstoff gefülltes Gefäß zu bringen und mit Hilfe eines Metallbolzens zu zerstoßen. Der Knochen liegt anschließend in Pulverform vor.

Sollen histologische Untersuchungen mittels eines Mikroskops durchgeführt werden, so wird eine Probe mit Parafin getränkt, ausgehärtet und dann mittels Mikrotom in dünne Gewebeschichten geschnitten.

Sollen pflanzliche Proben prozessiert werden, ist ein Zurechtschneiden mittels Skalpell nur bei weichen Materialien wie zum Beispiel Blättern, weichen Bohnen usw. möglich. Bei getrockneten oder gefrorenen Pflanzenproben werden diese in flüssigem Stickstoff eingefroren und in einem mit flüssigem Stickstoff aktiv gekühlten Mörser mit Hilfe eines Stößels zermahlen.

Die deutsche Patentschrift 738 286 lehrt, Zellen zusammen mit einer Dispersionsflüssigkeit einzufrieren und zu vermahlen, um Zellen so zu zerkleinern.

Aus den Druckschriften DE 602005001256 T2 sowie WO 2004/082837 A1 gehen jeweils eine Zerstoß-/Mischvorrichtung für Nahrungsmittel wie Gewürze hervor. Die Vorrichtung umfasst einen Hohlkörper mit einer darin befindlichen Kugel, mit der Nahrungsmittel zerstoßen werden sollen.

Die Druckschriften US 2004/0144874 A1, JP 2006051505 A, JP 2002-066 366 A sowie JP 03-186 360 A offenbaren weitere Beispiele für Ballmühlen und damit vergleichbare Vorrichtungen. Ein Verfahren für das Aufschließen einer biologischen Probe ist diesen Druckschriften nicht zu entnehmen

Die Druckschrift US 2004/0115720A A1 sowie WO 2004/027024 A2 offenbaren einen Probenbehälter mit einer darin befindlichen Kugel, um eine biologische Probe darin pulverisieren zu können,

Aus der Druckschrift US 6,23 5,5 01 B1 geht eine Apparatur für eine Isolierung von Komponenten von Proben hervor, die mit Hilfe von Ringen Probenbehälter zu halten vermag.

Die Druckschrift US 2005/ 01 78726A A1 offenbart einen Verfahren und eine Vorrichtung für das Aufschließen einer biologischen Probe. In einem Behälter befindet sich zu diesem Zweck ein separates Element.

Die Druckschrift US 6,25 8,9 30B1 offenbart das Kühlen eines Probenbehälters mit darin befindlicher biologischer Probe, um so eine Probe unter anderem während der Verarbeitung kühl halten zu können. Zu gegebener Zelt wird der Probenbehälter mithilfe von Adapterplatten mit einer Schüttelapparatur verbunden,

Mit einer Probenvorbereitung der vorgenannten Art wird das Ziel verfolgt, im Anschluss an die Prozessierung ein möglichst gutes gesuchtes Resultat zu erhalten. In Übereinstimmung hiermit ist es Aufgabe der vorliegenden Erfindung, eine biologische Probe geeignet und einfach aufzuschließen.

Eine Lösung der Aufgabe umfasst die Merkmale von Anspruch 1. Eine Vorrichtung zur Durchführung des Verfahrens umfasst die Merkmale des Nebenanspruchs. Vorteilhafte Ausgestaltungen ergeben sich aus den Unteransprüchen.

Eine geeignet vorbereitete Probe wird in einen aus Kunststoff bestehenden Behälter eingesetzt. Der Kunststoffbehälter wird in einen Adapter eingesetzt. Der Kunststoffbehälter Ist dann verschlossen. Er kann durch den Deckel des Adapters verschlossen worden sein. Bevorzugt weist der Kunststoffbehälter jedoch einen eigenen Deckel auf, damit der Kunststoffbehälter auch dann noch verschlossen ist, wenn er aus dem Adapter nach dem Aufschluss herausgenommen wird. Außerdem wird so der Reinigungsaufwand minimiert, wenn der Kunststoffbehälter nicht wieder verwendet, sondern schließlich entsorgt wird. Der Adapter wiederum wird mit einer Apparatur verbunden, die den Adapter automatisiert hin und her bewegt und zwar insbesondere nach oben und unten, um so die Probe aufzuschließen. Der Adapter ist insbesondere so gestaltet, dass er eine Mehrzahl von Kunststoffbehältern aufzunehmen vermag, um eine Mehrzahl von biologischen Proben zeitgleich aufschließen zu können.

Eine Probe wird vor dem Einsetzen in den Kunststoffbehälter insbesondere geeignet vorbereitet, indem die Probe zunächst gewaschen und anschließend mit Hilfe von flüssigem Stickstoff oder chemisch konserviert wird, also zum Beispiel mit Hilfe von RNAlater® der US-Firma Ambion aus Foster City oder mit Hilfe von AllProtect der Fa. Qiagen gemäß der Internetseite http://www1.qiagen.com/products/RnaStabilizationPurification/AllprotectTissu eReagent.aspx. Vor allem in Abhängigkeit von der Größe des Kunststoffbehälters wird die geeignet vorbereitete Probe ganz oder teilweise in den Kunststoffbehälter gefüllt. Wird nur ein Teil einer Probe eingefüllt, so wird dieser Teil beispielsweise mit Hilfe eines Skalpells abgetrennt.

Da im Fall einer chemischen Konservierung eine zu konservierende Probe klein sein muss, wird vorzugsweise der Kunststoffbehälter so dimensioniert, dass er nur kleine Proben aufzunehmen vermag. Wenn also aus diesem Grund stets nur eine kleine Probenmenge von vorzugsweise nicht mehr als 50 mg, besonders bevorzugt von nicht mehr als 30 mg vorzubereiten sind, dann werden so Handhabungsfehler verbessert vermieden.

Das Verfahren ermöglicht einen automatisierten Aufschluss von Proben und zwar auf verschiedene Weisen. Indem die gefrorene oder chemisch konservierte Probe zunächst in einen Kunststoffbehälter gebracht wird, der im eingesetzten Zustand verschlossen ist, wird so eine Kontamination von weiteren Bestandteilen der Gesamtvorrichtung vermieden. Der Kunststoffbehälter ist ein preiswerter Wegwerfartikel, der im Anschluss an das Aufschließen der Probe nicht für eine weitere Probe aus Kostengründen wieder verwendet werden muss. Eine Reinigung des benutzen Kunststoffbehälters kann daher entfallen. Da der Adapter eine Mehrzahl von Kunststoffbehältern mit einer darin befindlichen Probe aufzunehmen vermag, können eine Mehrzahl von Proben zeitgleich aufgeschlossen werden.

Der Adapter wiederum ist ein von der Apparatur getrennter Gegenstand, um den Adapter geeignet und einfach präparieren zu können. Insbesondere ist es dann leicht möglich, den Adapter vor dem Einsetzen der Kunststoffbehälter nebst Proben in einem Temperaturbereich von Insbesondere -20°C bis -80°C beispielsweise In einem Kühlschrank oder mit Hilfe von Trockeneis zu kühlen, um so eine gefrorene Probe aufschließen zu können, ohne ein Auftauen der Probe trotz fehlender aktiver Kühlung befürchten zu müssen.

Die anspruchsgemäße Lehre funktioniert sowohl für pflanzliches als auch für tierisches oder menschliches Gewebe und zwar sowohl für stabilisierte als auch für frische Proben von Pflanzen oder Geweben. Außerdem ist ein Aufschließen sowohl bei Raumtemperatur von chemisch konservierten Proben als auch von gefrorenen Proben bei tiefen Temperaturen sehr einfach möglich.

Um eine gefrorene Probe während des Aufschließens zuverlässig geeignet kühl halten zu können, umfasst der Adapter in einer Ausführungsform eine, vorzugsweise mehrere metallische Hülsen, in die die Kunststoffbehälter eingesetzt werden. Darüber hinaus besteht der Adapter ganz oder zumindest überwiegend aus Kunststoff. Metallische Hülsen verfügen über die erforderliche Wärmekapazität, um den Kunststoffbehälter hinreichend lange kühl zu halten. Darüber hinaus besteht der Adapter ganz oder überwiegend aus Kunststoff, damit der Adapter nicht zu schwer wird, was seine Handhabung zu sehr erschweren würde.

In einer Ausführungsform der Erfindung wird eine tiefgekühlte Probe in einen gekühlten Kunststoffbehälter gegeben, der außerdem wenigstens einen beweglichen, harten Körper enthält. Der gekühlte Kunststoffbehälter wird dann in den gekühlten Adapter bzw. in die metallische Hülse des gekühlten Adapters eingesetzt. Die Temperatur, auf die der Adapter in einer Ausführungsform gekühlt wird, sollte weniger als -50°C betragen, um ein Auftauen einer gefrorenen Probe während des Aufschließens zuverlässig zu vermeiden. Vorzugsweise ist eine Temperatur von ca. - 80 °C, so zum Beispiel von -70°C bis -90°C zu wählen. -80°C bzw. -70°C bis -90°C können mit Hilfe von Trockeneis oder in einem Kühlschrank preiswert bereitgestellt werden. Es hat sich gezeigt, dass sich durch eine Kühlung auf ca. -80°C besonders gute Ergebnisse erzielen lassen. Tiefere Temperaturen als -80°C sind bis zu einem gewissen Grad möglich. Zu beachten ist allerdings, dass der Adapter für die Durchführung eines Aufschlusses nicht zu stark abgekühlt werden darf. So hat sich eine Temperatur von flüssigem Stickstoff, also von - 196 °C als zu tief herausgestellt, um zu guten Resultaten zu gelangen. Der Adapter wird dann nach dem Einsetzen in die Apparatur durch diese schnell hin- und her bewegt, so dass der bewegliche Körper relativ zum Kunststoffbehälter derart geschüttelt wird, dass die tiefgekühlte Probe durch den beweglichen Körper zerstoßen und aufgeschlossen wird. Eine zusätzliche aktive Kühlung des Adapters beispielsweise mit Hilfe von Stickstoff hat sich als nicht erforderlich herausgestellt und ist daher vorzugsweise nicht vorhanden. Dies vereinfacht die Handhabung erheblich im Vergleich zu einem Stand der Technik, der eine aktive Kühlung während des Aufschlusses erfordert.

Besonders geeignet ist ein zylinderförmiger Innenraum des Kunststoffbehälters mit wenigstens einem hohlkugelförmigen Ende. Der bewegliche Körper ist dann bevorzugt eine Kugel oder aber ein Bolzen mit kugelförmigen Enden. Der Durchmesser der Kugel oder des Bolzens ist etwas kleiner als der Durchmesser des Innenraums des Kunststoffbehälters, um so die Beweglichkeit zu gewährleisten. Der bewegliche Körper besteht aus einem harten, vorzugsweise schweren Material wie Metall, um die Probe zerstoßen zu können. Die Probe wird vorzugsweise so in den Kunststoffbehälter eingebracht, dass diese sich zwischen einem hohlkugelförmigen Ende des Kunststoffbehälters und der Kugel bzw. dem Bolzen befindet. Der Durchmesser der Kugel bzw. des Bolzens beträgt vorzugsweise wenigstens 5 mm, besonders bevorzugt wenigstens 8 mm. Der Durchmesser des Kunststoffgefäßes beträgt vorzugsweise nicht mehr als 15 mm, bevorzugt bis zu 10 mm. Vorzugsweise wird der Kunststoffbehälter während des Aufschließen senkrecht angeordnet und das hohlkugelförmige Ende befindet sich unten. Schwerkraftbedingt verbleibt das Probenmaterial dann in erster Linie im unteren Bereich, so dass nur ein (unteres) hohlkugelförmiges Ende genügt, um mit Hilfe einer Kugel zuverlässig zerstoßen zu können.

Insbesondere wird eine wenigstens -50°C kalte Probe in das Kunststoffgefäß gegeben. Anschließend wird das Gefäß insbesondere 10 bis 200 Sekunden so mit Hilfe der Apparatur geschüttelt, dass der bewegliche Körper hin- und her, bevorzugt hoch und runter geschleudert wird und zwar vorzugsweise mit einer Frequenz von 10 bis 100 Hz, insbesondere mit einer Frequenz von wenigstens 30 Hz. Wird zu lange geschüttelt bzw. hin und her bewegt, so droht ein Auftauen der Probe. Um innerhalb der zur Verfügung stehenden Zeit die Probe zuverlässig aufschließen zu können, muss genügend lange sowie mit einer hinreichend hohen Frequenz hin- und her bewegt werden. Im Anschluss daran kann die so zerstoßene Probe aus dem Kunststoffgefäß entnommen und die gewünschte Menge mit Hilfe eines Kits gemäß einem Protokoll prozessiert werden. Grundsätzlich befinden sich dann in dem Kunststoffgefäß außer der gefrorenen Probe und einem oder mehreren beweglichen harten Körpern keine weiteren Substanzen und zwar insbesondere auch kein Kühlmittel wie flüssiger Stickstoff oder aber beispielsweise Pufferlösungen. Diese würden zumindest in der Regel lediglich das gewünschte Ergebnis verschlechtern.

Es hat sich überraschend gezeigt, dass bei dieser Form des Aufschließens einer gefrorenen Probe sehr gute Ergebnisse im Vergleich zu den aus dem Stand der Technik bekannten Probenvorbereitungen erzielt werden, obwohl kein großer technischer Aufwand betrieben wird und die Handhabung einfach ist. Ein Aufschluss in beispielsweise einem TissueRupter kann entfallen bzw. entfällt, da dieser zusätzliche Aufschluss grundsätzlich nicht erforderlich ist. Die so vorbereitete Probe kann also sofort prozessiert werden und dies mit besonders guten Endergebnissen. Der technische Aufwand ist nicht groß, da das Gefäß mit dem darin befindlichen, beweglichen Körper nebst Adapter lediglich beispielsweise in einem Kühlschrank auf eine Temperatur von beispielsweise -50°C bis -80°C gekühlt wird. Nach dem Zerstoßen der Probe kann diese entnommen und beispielsweise erst einmal wieder beispielsweise gekühlt in einem weiteren Gefäß gelagert werden. Alternativ wird die Probe nicht entnommen und in einem weiteren Gefäß gelagert, sondern sofort in dem Kunststoffgefäß, welches den beweglichen Körper enthält. Es dient also dann zugleich als Aufschlussgefäß und Aufbewahrungsbehälter. Die gewünschte Probenmenge für die Prozessierung kann genau und einfach bereitgestellt werden. Auch wird dabei eine homogene Gewebeverteilung erreicht. Selbst stabilisiertes Gewebe, Blätter und Samen von Pflanzen können in dieser Weise für die weitere Prozessierung vorbereitet werden. Für Haut und Knochen und vergleichbar harte bzw. viskose Proben ist allerdings dieses Verfahren nicht geeignet.

Da die Bearbeitung im gekühlten, geschlossenen Adapter nicht sehr viel Zeit in Anspruch nimmt, ist es nicht erforderlich, den Schüttelvorgang zu unterbrechen und den Adapter zwischendurch wieder auf geeignet tiefe Temperaturen abzukühlen. Dies gilt vor allem, wenn der Adapter Hülsen aus Metall mit hinreichend dicken Wandungen aufweist. Eine Wandung von wenigen Millimeter Dicke genügt in der Regel bereits. Die Dicke der Wandung liegt in einer Ausführungsform bei wenigstens 0,5 mm, um eine hinreichende Wärmekapazität bereitzustellen, vorzugsweise bei wenigstens einem Millimeter. Um nicht zu schwer zu werden, beträgt die Wandung in einer Ausführungsform nicht mehr als 4mm.

Da die Probe nach dem Zerstoßen in Pulverform vorliegt, weist diese vorteilhaft eine besonders große Oberfläche auf, an der nachfolgend eingesetzte Chemikalien angreifen können. Eine gewünschte Menge an Pulver kann für nachfolgende Schritte besonders einfach bereitgestellt werden, so zum Beispiel durch Wiegen oder sogar durch entsprechend dimensionierte Messgefäße wie ein Messlöffel.

Der Adapter eignet sich selbst für das Aufschließen einer ungekühlten Probe im ungekühlten Zustand. Allerdings wird die Probe dann mit Hilfe eines Lysepuffers aufgeschlossen, der sich während des Aufschließens zusammen mit der Probe im Kunststoffbehälter befindet. Ein Zerstoßen der Probe kann auch stattfinden, wenn der Adapter ungekühlt benutzt wird. Hier entsteht eine Lösung zwischen Puffer und Gewebe. Geeignete Lysepuffer sind Puffer umfassend Komplexbildner und oberflächenaktive Substanz für das Aufschließen von DNA wie zum Beispiel der Lysepuffer ATL, kommerziell erhältlich bei der Fa. Qiagen GmbH aus Hilden, Deutschland, oder aber Puffer umfassend umfassend chaotrope Substanz für das Aufschließen von RNA wie zum Beispiel der Lysepuffer RLT, kommerziell erhältlich bei der QIAGEN GmbH.

Nachdem im gekühlten Zustand das zuvor eingewogene Gewebestücken zu Pulver verarbeitet worden ist, wird in einer Ausführungsform ein Puffer hinzugegeben, d. h. das Pulver wird in Lösung überführt. So werden Schwierigkeiten vermieden, um sehr kleine Probenmengen von zum 10 mg Gewebepulver wieder zu entnehmen.

Wird Gewebe aufgeschlossen, so werden vorzugsweise relativ große metallische bewegliche Körper für das Aufschließen verwendet, die sich in den Kunststoffbehältern befinden. Werden Bakterien aufgeschlossen, so bestehen die beweglichen, relativ kleinen Körper insbesondere aus Glas (sogenannte Glasbeads). Glasbeads haben einen geringen Durchmesser und sind wie Sand. Hierdurch wird die Reibung sehr viel stärker. Diese Eigenschaften werden benötigt, um Bakterien aufschließen zu können. Metalbeads sind regelmäßig zu groß, so dass der Abstand der einzelnen Kugeln zu große Freiräume bieten würde, um damit Bakterien aufschließen zu können.

Anstelle des genannten Kunststoffes kann grundsätzlich auch ein anderes nicht metallisches Material gewählt werden, insbesondere wenn dieses mit Kunststoff vergleichbar ist. Kunststoff ist allerdings besonders zu bevorzugen. Weitere Vorteile und Ausgestaltungen ergeben sich aus den nachfolgenden Versuchsbeschreibungen.

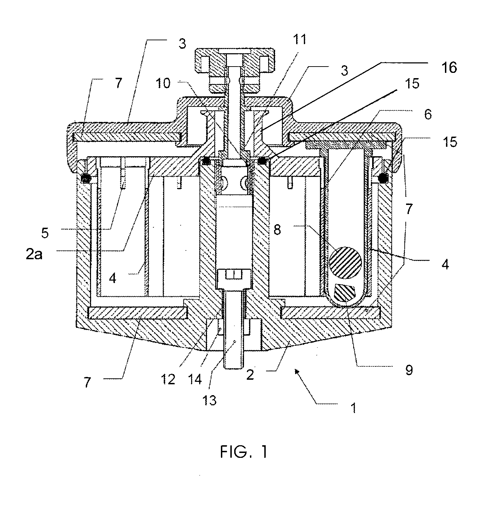

Figur 1 zeigt einen seitlichen Schnitt durch einen Adapter 1. Der Adapter 1 umfasst einen behälterförmigen Grundkörper 2, der mit einem Deckel 3 verschlossen worden ist. Im Grundkörper sind insgesamt zwölf aus Aluminium bestehende Hülsen 4 (in Aufsicht gesehen) kreisförmig um eine zentrale Achse des Adapters herum angeordnet. Die Wandstärke der Hülsen 4 beträgt 1 mm. Die Hülsen 4 weisen in einem oberen Bereich ein oder mehrere Schlitze 5 auf. Der obere Bereich mit dem Schlitz wird klemmend in einem Einsatz 2a, der sich im Grundkörper 2 befindet, gehalten. Die Hülsen 4 können daher zu Reinigungszwecken aus dem Grundkörper 2 herausgenommen werden und zwar besonders leicht zusammen mit dem Einsatz 2a.

In Figur 1 wird ein mit einem Deckel versehener Kunststoffbehälter 6 gezeigt, der in eine Metallhülse 4 eingesetzt ist. Der Kunststoffbehälter 6 wird von zwei elastischen, ringförmigen Scheiben 7 aus geschäumten Silikon eingeklemmt, die unterhalb und oberhalb des Kunststoffbehälters 6 angeordnet sind. Die obere ringförmige Scheibe wird vom Deckel 3 durch seitliche Nuten gehalten, die an der Unterseite des Deckels 3 angeordnet sind. Die untere ringförmige Scheibe 7 wird am Boden des Grundkörpers 2 durch seitliche Nuten gehalten. Die elastischen Scheiben 7 stabilisieren den Behälter während des Aufschließens, so dass dieser nicht beschädigt werden kann. Die elastischen Scheiben 7 wirken darüber hinaus geräuschdämmend.

Der Boden des aus Kunststoff bestehenden Behälters 6 ist hohlkugelförmig. Im Behälter 6 befindet sich eine aus Stahl bestehende Kugel 8. Zwischen der Stahlkugel 8 und dem hohlkugelförmigen Grund des Kunststoffbehälters 6 ist eine biologische Probe 9 eingebracht. Es genügt, dass nur der Boden und nicht auch der Deckelbereich des Kunststoffbehälters 6 hohlkugelförmig ist, da die Probe bereits schwerkraftbedingt zumindest überwiegend im unteren Bereich verbleiben wird, so dass die Probe im Bodenbereich zerstoßen wird. Der Grundkörper 2 ist in der oberen Hälfte mit einem aus Stahl bestehenden Gewindeeinsatz 10 versehen, in den eine Befestigungsschraube 11 des Deckels 3 hinein geschraubt wird, um den Grundkörper mit dem Deckel zu verschließen. Vorzugsweise genügt eine Vierteldrehung, um den Deckel zu befestigen. In der unteren Hälfte gibt es eine weitere, aus Stahl bestehende Gewindebuchse 1 2, in die eine Schraube 13 hineingedreht worden ist, so dass das Gewinde der Schraube 13 gegenüber dem Bodenbereich des Behälters 2 hervorsteht. Die Schraube 13 ist darüber hinaus eingeklebt und mit einer Mutter 14 gekontert, damit diese sich zuverlässig aus dieser Befestigung nicht löst.

Der nach unten vorstehende Teil des Gewindes der Schraube 13 dient zur lösbaren Befestigung des Adapters 1 mit der Apparatur, mit der der Adapter nach oben und unten oszillierend bewegt wird, um so eine Probe 9 mit einer Kugel 8 zu zerstoßen und aufzuschließen.

Der Grundkörper 2 besteht darüber hinaus aus Kunststoff und zwar aus Polyoxymethylen. Dieser Kunststoff widersteht tiefen Temperaturen von um die -80°C sowie gängigen Reinigungslösungen. Der aus Polyoxymethylen bestehender, ringförmiger Einsatz 2a wird im oberen Bereich des Grundkörpers 2 durch O-Ringe 15 aus Silikon mit einer Härte von 50 Shore gelagert und darüber hinaus durch den Deckel 3 klemmend gehalten. Der obere Bereich der metallischen Hülsen ist im Einsatz 2a eingeklemmt. Die aus Silikon bestehenden Ringe dienen so der Geräuschdämmung. Es können auch andere Kunststoffe gewählt werden, die den genannten Anforderungen gewachsen sind.

Der Deckel 3 und der Einsatz 2a kann durch eine elastische Zwischenlage voneinander getrennt sein, um so Geräusche während des Aufschließens weiter zu dämmen. Die Zwischenlage kann ebenfalls ein Silikonring sein.

Der Einsatz 2a weist einen nach oben vorstehenden, mittig angeordneten Griffbereich 16 auf, um den Einsatz 14 zusammen mit den Hülsen und den darin eingehängten Kunststoffbehältern herausnehmen zu können. Um die Kunststoffbehälter geeignet einhängen zu können, weisen diese im oberen Bereich einen breiteren Rand auf, der breiter ist als der Innendurchmesser der Hülse 4. Im gezeigten Ausführungsbeispiel gibt es einen oberen Bereich der Hülse mit verbreitertem Innendurchmesser, um einen verbreiterten Rand eines Kunststoffbehälters aufnehmen zu können. Wird der Einsatz 2a zusammen mit den Kunststoffbehältern 6 herausgenommen, so gelangt der breitere obere Rand des Kunststoffbehälters in die entsprechende obere Ausnehmung der Hülse mit dem vergrößerten Innendurchmesser und wird dann während des Transports besonders sicher gehalten.

Der Durchmesser des in Figur 1 dargestellten Grundkörpers beträgt ca. 80 mm. Der Grundkörper ist ca. 50 mm hoch. Der Innendurchmesser einer metallischen Hülse 4 beträgt 11 mm. Eine solche Hülse 4 ist 35 mm hoch. Entsprechend dimensionierte Kunststoffbehälter 6 werden zweckmäßigerweise standardisiert mit ca. 25 mg Probenmaterial gefüllt, um standardisiert aufschließen zu können.

Die genannten Maße und Materialien des Adapters sind lediglich zweckmäßig und müssen nicht zwingend gewählt werden. Entsprechendes gilt für die gezeigte Konstruktion des Adapters.

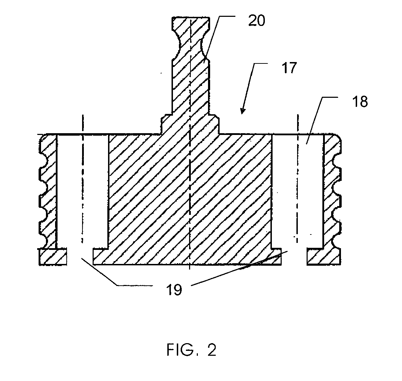

In Figur 2 wird ein Ständer gezeigt, auf den der Einsatz 2a zusammen mit den eingehängten Kunststoffbehältern 6 nebst Hülsen abgestellt werden kann. Die zylinderförmigen Vertiefungen 18 des Ständers dienen der Aufnahme der Hülsen 4 nebst Kunststoffbehältern 6. Bohrkegel 19 dienen dem Herausdrücken der Kunststoffgefäße aus den Hülsen, um die Kunststoffgefäße leicht entnehmen zu können. Der nach oben vorstehende Griff 20 des Ständers 1 7 wird durch die zentrale Öffnung des Einsatzes 2a hindurch geschoben, um den Einsatz 2a auf dem Ständer 1 7 abzustellen.

Mit dem in Figur 1 gezeigten Adapter wurden die nachfolgenden Versuche durchgeführt.

### 1. DNA Isolation aus frischer Rattenleber und frischem Rattenherz

Jeweils 12 Proben (25 mg) frischer Rattenleber und -herz wurden mit 180 µl ATL, also einem Puffer umfassend Komplexbildner und oberflächenaktive Substanz, kommerziell erhältlich von QIAGEN GmbH, Hilden, Deutschland, (siehe Internetseite
http://www1.qiagen.com/Products/Accessories/Buffers/BufferATL.aspx), 10 µl DX (siehe Internetseite http://www1.qiagen.com/Products/ReagentDX.aspx) und zwei metallischen Edelstahlkugeln (auch "Beads" genannt) mit einem Durchmesser von 5 mm versetzt und bei 50 Hz für 1,5 min. aufgeschlossen. Versuche zeigten, dass bei zwei Beads die Turbulenzen größer sind, was zu einer höheren Zermahlung des Gewebes führt. Der Adapter wurde also von der Apparatur mit einer Frequenz von 50 Hz nach oben und unten bewegt. Im Anschluss wurden die Proben entnommen und herunter zentrifugiert und zwar mit einer kleinen Tischzentrifuge. In diese Tischzentrifuge wurde der Adapter nach dem Aufschluss eingespannt. Im Anschluss wurde die Zentrifuge kurz eingeschaltet, was ausreicht, um alle Bestandteile wieder auf den Boden des Adapters zu bekommen.

Danach wurden jeweils 20 µl Proteinase K hinzugegeben, gevortext und die Lösung für 1 h bei 56 °C inkubiert. Nach der Inkubation wurde die Probe mit 4µl RNAse A (100 mg/ml) versetzt und für 5 min. inkubiert. Weitere Schritte erfolgten nach dem DNeasy Protokoll (siehe Internetseite http://www1.qiagen.com/Products/GenomicDnaStabilizationPurification/DNea syTissueSystem/DNeasyBloodTissueKit.aspx).

### Ergebnisse:

### Herz:

Das Herzgewebe ergab einen Mittelwert von 5,83 µg DNA sowie eine Standardabweichung von 1,07. Die isolierte Menge an DNA hätte etwas höher ausfallen können, ansonsten gab es keine Beanstandungen.

### Leber:

Das Lebergewebe ergab einen Mittelwert von 34,08 µg DNA sowie eine Standardabweichung von 10,97. Beim Aufschluss des Lebergewebes zeigte sich, dass der Aufschluss sehr gut funktioniert.

### 2. DNA Isolation aus frischer Rinderleber

Jeweils 12 Proben (25 mg) frischer Rinderleber wurden mit 180 µl ATL, 6 µl DX und 2 beads versetzt und bei 50 Hz für 2 Minuten aufgeschlossen. Im Anschluss wurden die Proben entnommen und runterzentrifugiert. Danach wurden jeweils 20 µl Proteinase K hinzugegeben, gevortext und die Lösung für 1,5 h bei 56 °C inkubiert. Nach der Inkubation wurde die Probe mit 4µl RNAse A (100 mg/ml) versetzt und für 5 Minuten bei Raumtemperatur inkubiert. Weitere Schritte erfolgten nach dem Tissue and rodent tail Protokoll auf dem QlAcube der Fa. Qiagen aus Hilden, Deutschland. Das Tissue and rodent tail Protokoll wird zusammen mit dem QIAcube ausgeliefert.

### Ergebnisse:

### Leber:

Das Lebergewebe ergab einen Mittelwert von 44,38 µg DNA sowie eine Standardabweichung von 12,84. Beim Aufschluss des Lebergewebes zeigte sich erneut, dass der Aufschluss sehr gut funktioniert. Die DNA war wiederum bereits als weißes Knäuel sichtbar und konnte nur mit Problemen mittels Pipette in ein neues MRV (MRV = Micro reaction vessel = Microreaktionsgefäß oder auch kurz "Eppi" genannt) überführt werden.

In der Regel werden 20 µg an DNA erwartet. Der hohe Mittelwert von 44,38 µg DNA deutete auf eine voranschreitende Degradation der DNA hin. Kleine Fragmente führen bei der Messung zu einem höheren Signal, was fälschlicherweise als höhere Konzentration angegeben wird.

## Patentansprüche

1. Verfahren für das Aufschließen einer biologischen Probe (9) mit den Schritten:
• die Probe (9) wird In einen nicht metallischen Behälter (6) gefüllt,
• wenigstens ein beweglicher, harter Körper (8), vorzugsweise zwei bewegliche harte Körner werden in den Behälter elngefüllt
• ein Adapter mit dem darin befindlichen, verschlossenen Behälter (6) wird mit einer Apparatur verbunden, die den Adapter automatisiert hin- und her bewegt und zwar insbesondere nach oben.
**dadurch gekennzeichnet, dass**
• der Behälter (6) in den gekühlten Adapter (2, 2a) eingesetzt wird.

2. Verfahren nach Anspruch 1, bei dem in den Adapter eine Mehrzahl von Behältern (6) mit darin befindlichen biologischen Proben (9) eingesetzt werden, die zeitgleich durch das automatisierte Hin- und Herbewegen mittels Adapter aufgeschlossen werden.

3. Verfahren nach einem der vorhergehenden Ansprüche, bei dem die Probe (9) zunächst gewaschen und anschließend mit flüssigem Stickstoff eingefroren oder chemisch konserviert wird und die so vorbereitete Probe In den Behälter (6) gefüllt wird.

4. Verfahren nach einem der vorhergehenden Ansprüche, bei dem der Adapter aus Metall bestehenden Hülsen (4) umfasst, in die Behälter (6) nebst darin befindlichen biologischen Proben eingesetzt werden.

5. Verfahren nach dem vorhergehenden Anspruch, bei dem die Behälter (6), Proben (9) und Adapter (2, 2a) zunächst auf unter -20°C, vorzugsweise auf unter -50°C gekühlt werden und im Anschluss daran die Probe durch Hin- und Herbewegen des Adapters aufgeschlossen wird.

6. Verfahren nach einem der beiden vorhergehenden Ansprüche, bei dem der Adapter (2, 2a) nicht unter -80°C gekühlt wird.

7. Verfahren nach einem der vorhergehenden Ansprüche, wobei die Körper insbesondere aus Metall oder Glas bestehen.

8. Verfahren nach einem der vorhergehenden Ansprüche, bei dem vor dem Aufschließen ein Lysepuffer in den Behälter (6) gefüllt wird, insbesondere ein Puffer umfassend Komplexbildner und oberflächenaktive Substanz für das Aufschließen von DNA, vorzugsweise ATL oder ein Puffer umfassend chaotrope Substanz für das Aufschließen von RNA, insbesondere RLT.

9. Verfahren nach einem der vorhergehenden Ansprüche, bei dem der Adapter (2, 2a) mit einer Frequenz von wenigstens 10 Hz, vorzugsweise von wenigstens 30 Hz hin und her bewegt wird.

10. Verfahren nach einem der vorhergehenden Ansprüche, bei dem das Gewicht einer in einen Behälter (6) eingefüllten Probe nicht mehr als 50 mg, vorzugsweise nicht mehr als 30 mg beträgt

11. Verfahren nach einem der vorhergehenden Ansprüche, bei dem der Behälter (6) aus Kunststoff besteht

12. Vorrichtung zur Durchführung eines Verfahrens nach einem der vorhergehenden Ansprüche umfassend einen insbesondere überwiegend aus Kunststoff bestehenden Adapter (2, 2a) wobei der Adapter so beschaffen ist dass dieser zusammen mit einem darin befindlichen, verschlossene Behälter mit einer Apparatur verbunden werden kann, die den Adapter automatisiert hin- und her zu bewegen vermag **dadurch gekennzeichnet, dass** der Adapter aus Metall bestehenden Hülsen (4) für die Aufnahme von nichtmetallischen, vorzugsweise aus Kunststoff bestehenden Behältern (6) aufweist.

13. Vorrichtung nach dem vorhergehenden Vorrichtungsanspruch, bei dem der Adapter (2, 2a) lösbar, Insbesondere abschraubbar mit einer Apparatur verbunden ist, die den Adapter parallel zu den Hülsen automatisiert hin und her bewegen kann.

14. Vorrichtung nach dem vorhergehenden Anspruch, bei dem die Apparatur so ausgelegt ist, dass diese den Adapter mit einer Frequenz von wenigstens 10 Hz, vorzugsweise von wenigstens 30 Hz hin und her zu bewegen vermag.

15. Vorrichtung noch einem der vorhergehenden Vorrichtungsansprüche mit in den Hülsen eingesetzten Behältern (6), in denen sich eine biologische Probe (9) sowie zusätzlich ein beweglicher harter Körper (8) befindet, der insbesondere aus Metall oder Glas besteht.

16. Vorrichtung nach einem der vorhergehenden Vorrichtungsansprüche mit einem inneren Hülsendurchmesser der metallischen Hülsen (4) von nicht mehr als 16 mm, vorzugsweise von nicht mehr als 12 mm.

17. Vorrichtung nach einem der vorhergehenden Ansprüche mit wenigstens sechs metallischen Hülsen (4), vorzugsweise mit wenigstens zwölf metallischen Hülsen (4) für die Aufnahme von Behältern (6).

18. Vorrichtung nach einem der vorhergehenden Ansprüche, bei dem die Hülsen (4) von einem aus dem Adapter herausnehmbaren Einsatz (2a) gehalten werden

19. Vorrichtung nach einem der vorhergehenden Ansprüche mit in Aufsicht ringförmig angeordneten Hülsen (4).

20. Vorrichtung nach einem der vorhergehenden Ansprüche mit einem Deckel (3), der mit dem Adapter (2, 2a) fest verbindbar ist.

## Claims

1. Method for decomposing a biological sample (9), with the steps that:
• the sample (9) is filled into a nonmetallic container (6),
• at least one movable, hard body (8), preferably two movable hard bodies, are filled into the container,
• an adapter with the closed container (6) therein is connected to an apparatus, which moves the adapter back and forth, to be precise in particular upwards, in an automated fashion, **characterized in that**
• the container (6) is inserted into the cooled adapter (2, 2a).

2. Method according to Claim 1, in which a plurality of containers (6) with biological samples (9) therein are inserted into the adapter and are simultaneously decomposed by the automated movement back and forth by means of the adapter.

3. Method according to one of the preceding claims, in which the sample (9) is first washed and then frozen with liquid nitrogen or chemically preserved, and the sample prepared in this way is filled into the container (6).

4. Method according to one of the preceding claims, in which the adapter comprises sleeves (4) consisting of metal, into which containers (6) along with biological samples therein are inserted.

5. Method according to one of the preceding claims, in which the containers (6), samples (9) and adapter (2, 2a) are first cooled to below -20°C, preferably to below -50°C, and after that the sample is decomposed by moving the adapter back and forth.

6. Method according to either of the two preceding claims, in which the adapter (2, 2a) is not cooled below -80°C.

7. Method according to one of the preceding claims, with the bodies consisting in particular of metal or glass.

8. Method according to one of the preceding claims, in which, before the decomposition, a lysis buffer is filled into the container (6), in particular a buffer comprising complexing agents and a surface-active substance for the decomposing of DNA, preferably ATL, or a buffer comprising a chaotropic substance for the decomposing of RNA, in particular RLT.

9. Method according to one of the preceding claims, in which the adapter (2, 2a) is moved back and forth with a frequency of at least 10 Hz, preferably of at least 30 Hz.

10. Method according to one of the preceding claims, in which the weight of a sample filled into a container (6) is no more than 50 mg, preferably no more than 30 mg.

11. Method according to one of the preceding claims, in which the container (6) consists of plastic.

12. Apparatus for carrying out a method according to one of the preceding claims, comprising an adapter (2, 2a), in particular consisting predominantly of plastic, the adapter being constructed in such a way that, together with a closed container therein, it can be connected to an apparatus which is able to move the adapter back and forth in automated fashion, **characterized in that** the adapter has sleeves (4), consisting of metal, for receiving nonmetallic containers (6), preferably consisting of plastic.

13. Apparatus according to the preceding apparatus claim, in which the adapter (2, 2a) is detachably, in particular unscrewably, connected to an apparatus which can move the adapter back and forth parallel to the sleeves in an automated fashion.

14. Apparatus according to the preceding claim, in which the apparatus is designed such that it is able to move the adapter back and forth with a frequency of at least 10 Hz, preferably of at least 30 Hz.

15. Apparatus according to one of the preceding apparatus claims, with containers (6) which are inserted into the sleeves and in which there is a biological sample (9) and additionally a movable hard body (8), which consists in particular of metal or glass.

16. Apparatus according to one of the preceding apparatus claims, with an inner sleeve diameter of the metallic sleeves (4) of no more than 16 mm, preferably of no more than 12 mm.

17. Apparatus according to one of the preceding claims, with at least six metallic sleeves (4), preferably with at least twelve metallic sleeves (4), for receiving containers (6).

18. Apparatus according to one of the preceding claims, in which the sleeves (4) are held by an insert (2a) which can be removed from the adapter.

19. Apparatus according to one of the preceding claims, with sleeves (4) arranged in the form of a ring in plan view.

20. Apparatus according to one of the preceding claims, with a cover (3), which can be fixedly connected to the adapter (2, 2a).

## Revendications

1. Procédé pour l'ouverture d'un échantillon biologique (9) comportant les étapes suivantes:
• on verse l'échantillon (9) dans un récipient non métallique (6),
• on introduit dans le récipient au moins un corps dur mobile (8), de préférence deux corps durs mobiles,
• on relie un adaptateur, dans lequel se trouve le récipient fermé (6), à un appareillage qui déplace l'adaptateur en va-et-vient de façon automatisée, notamment en particulier vers le haut,
**caractérisé en ce que**
• on introduit le récipient (6) dans l'adaptateur refroidi (2, 2a).

2. Procédé selon la revendication 1, dans lequel on introduit dans l'adaptateur une multiplicité de récipients (6) dans lesquels se trouvent des échantillons biologiques (9), qui sont ouverts simultanément par le mouvement automatisé de va-et-vient au moyen de l'adaptateur.

3. Procédé selon l'une quelconque des revendications précédentes, dans lequel on lave d'abord l'échantillon (9) et ensuite on le congèle ou on le conserve chimiquement avec de l'azote liquide et on charge l'échantillon ainsi préparé dans le récipient (6).

4. Procédé selon l'une quelconque des revendications précédentes, dans lequel l'adaptateur comprend des douilles (4) constituées de métal, dans lesquelles on introduit des récipients (6) dans lesquels se trouvent des échantillons biologiques.

5. Procédé selon l'une quelconque des revendications précédentes, dans lequel on refroidit les récipients (6), les échantillons (9) et l'adaptateur (2, 2a) d'abord à une température inférieure à -20°C, de préférence inférieure à -50°C, et on ouvre ensuite l'échantillon par le mouvement de va-et-vient de l'adaptateur.

6. Procédé selon l'une des deux revendications précédentes, dans lequel on ne refroidit pas l'adaptateur (2, 2a) en dessous de -80°C.

7. Procédé selon l'une quelconque des revendications précédentes, dans lequel les corps sont constitués en particulier de métal ou de verre.

8. Procédé selon l'une quelconque des revendications précédentes, dans lequel, avant l'ouverture, on charge dans le récipient (6) un tampon de lyse, en particulier un tampon comprenant des agents complexants et une substance tensioactive pour l'ouverture de l'ADN, de préférence de l'ATL ou un tampon comprenant une substance chaotrope pour l'ouverture de l'ARN, en particulier du RLT.

9. Procédé selon l'une quelconque des revendications précédentes, dans lequel on déplace l'adaptateur (2, 2a) en va-et-vient avec une fréquence d'au moins 10 Hz, de préférence d'au moins 30 Hz.

10. Procédé selon l'une quelconque des revendications précédentes, dans lequel le poids d'un échantillon chargé dans un récipient (6) ne vaut pas plus de 50 mg, de préférence pas plus de 30 mg.

11. Procédé selon l'une quelconque des revendications précédentes, dans lequel le récipient (6) est constitué de matière synthétique.

12. Dispositif pour la mise en oeuvre d'un procédé selon l'une quelconque des revendications précédentes, comprenant un adaptateur (2, 2a) constitué en particulier principalement de matière synthétique, dans lequel l'adaptateur est configuré de telle manière que, en même temps qu'un récipient fermé se trouvant dans celui-ci, il puisse être raccordé à un appareillage, qui permet de déplacer l'adaptateur en va-et-vient de façon automatisée, **caractérisé en ce que** l'adaptateur présente des douilles (4) constituées de métal destinées à recevoir des récipients (6) non métalliques, constitués de préférence de matière synthétique.

13. Dispositif selon la revendication de dispositif précédente, dans lequel l'adaptateur (2, 2a) est relié de façon séparable, en particulier dévissable, à un appareillage qui peut déplacer l'adaptateur en va-et-vient de façon automatisée parallèlement aux douilles.

14. Dispositif selon la revendication précédente, dans lequel l'appareillage est conçu de telle manière qu'il permette de déplacer l'adaptateur en va-et-vient avec une fréquence d'au moins 10 Hz, de préférence d'au moins 30 Hz.

15. Dispositif selon l'une quelconque des revendications de dispositif précédentes avec des récipients (6) introduits dans les douilles, dans lesquels il se trouve un échantillon biologique (9) ainsi qu'en outre un corps dur mobile (8), qui est constitué en particulier de métal ou de verre.

16. Dispositif selon l'une quelconque des revendications de dispositif précédentes avec un diamètre intérieur de douille des douilles métalliques (4) non supérieur à 16 mm, de préférence non supérieur à 12 mm.

17. Dispositif selon l'une quelconque des revendications précédentes avec au moins six douilles métalliques (4), de préférence avec au moins douze douilles métalliques (4), destinées à recevoir des récipients (6).

18. Dispositif selon l'une quelconque des revendications précédentes, dans lequel les douilles (4) sont maintenues par un insert (2a) pouvant être retiré hors de l'adaptateur.

19. Dispositif selon l'une quelconque des revendications précédentes, avec des douilles (4) disposées en anneau dans une vue en plan.

20. Dispositif selon l'une quelconque des revendications précédentes avec un couvercle (3), qui peut être assemblé fermement à l'adaptateur (2, 2a).
